# EUROPÄISCHE PATENTSCHRIFT

(11) **EP 1 618 774 B1**
(45) Veröffentlichungstag und Bekanntmachung des Hinweises auf die Patenterteilung: **05.09.2012**
(21) Anmeldenummer: 05015397.2
(22) Anmeldetag: 15.07.2005
(51) Int. Cl.: A01C 17/00

(54) **Schleuderdüngerstreuer**
Centrifugal fertilizer spreader
Épandeur centrifuge pour engrais

(30) Priorität: 21.07.2004 DE 102004035218; 29.07.2004 DE 102004036865
(43) Veröffentlichungstag der Anmeldung: 25.01.2006
(73) Patentinhaber: Amazonen-Werke H. Dreyer GmbH & Co. KG, 49205 Hasbergen (DE)
(72) Erfinder: Dreyer, Heinz, Dr. Dipl.-Ing. Univ., 49205 Hasbergen (DE); Dreyer, Justus, Dr. Dipl.-Ing., 49078 Osnabrück (DE); Lührmann, Johannes, 49134 Wallenhorst (DE)

(56) Entgegenhaltungen:
- EP-A- 0 440 882
- EP-A- 0 820 689
- EP-A- 1 183 922
- DE-A1- 4 003 945
- DE-A1- 10 042 793

## Beschreibung

Die Erfindung betrifft einen Schleuderdüngerstreuer gemäß des Oberbegriffes des Patentanspruches 1.

Ein derartiger Schleuderdüngerstreuer ist beispielsweise in der DE-OS 40 03 945 A1 beschrieben. Auf den Schleuderscheiben sind entsprechend der Darstellung in der Fig. 2 zwei Wurfschaufeln unterschiedlicher Länge angeordnet. Die Rückwände der Wurfschaufeln können verschwenkt werden, so dass ein Teil der Rückwände der Wurfschaufeln nicht mehr an der Schleuderwirkung teilnimmt. Hierdurch lässt sich der Schleuderdüngerstreuer von Normalstreuen auf Grenzstreuen umstellen. Beim Normalstreuen wird der Dünger mit relativ großen Wurfweiten abgeschleudert, so dass flach abfallende Streuflanken eines Streubildes entstehen, die dann bei hin- und herfahren miteinander überlappt werden. Beim Grenzstreuen entsteht nach Verschwenken der Rückwände der Wurfschaufeln eine zur Feldrandgrenze steil abfallende Streuflanke. Hierdurch wird dann der Dünger mit etwa gleichbleibender Streustärke bis an den Feldrand herangeworfen.

Der Erfindung liegt die Aufgabe zugrunde, den Schleuderdüngerstreuer durch Einstellen der wirksamen Längen der Wurfschaufeln für verschiedene Arbeitsweisen ausgestalten zu können, so dass das jeweils gewünschte Streubild für den jeweiligen Einsatzfall in einfacher Weise zu erzeugen ist.

Diese Aufgabe wird erfindungsgemäß durch die kennzeichnenden Merkmale des Patentanspruches 1 gelöst. Infolge dieser Maßnahmen wird durch das unwirksam machen des inneren Abschnittes der Wurfschaufeln eine Durchtrittsöffnung zu der hinter der vorderen Wurfschaufel angeordneten und als Rand- und/oder Grenzstreuschaufel wirkenden Wurfschaufel geschaffen. Hierdurch lässt sich eine Änderung der Streubildcharakteristik entsprechend den vorliegenden Einsatzverhältnissen in gewünschter Weise erreichen.

Um zu gewährleisten, dass der durch das Verstellen des inneren Abschnittes der vorderen Wurfschaufel geschaffenen Durchtrittsöffnung das zu verteilende Material der dahinter angeordneten Wurfschaufeln in vorgesehener Weise zugeführt wird, ist vorgesehen, dass das innere Ende der Rückwand der weiteren Wurfschaufel derart zu der vorderen Wurfschaufel angeordnet ist, dass der weiteren Wurfschaufel die durch das Verstellen des inneren Abschnittes der vorderen Wurfschaufel geschaffenen Durchtrittsöffnung Material zugeführt wird.

Um die Zuleitung dieses Materials durch die Durchtrittsöffnung entsprechend der hinteren Wurfschaufel verlustfrei zuzuleiten, ist vorgesehen, dass das innere Ende der Rückwand der weiteren Wurfschaufel an die innerenhinteren Bereiche der vorderen Wurfschaufel anschließt.

Um Spritzverluste bei der Durchleitung durch die Durchtrittsöffnung zu der hinteren Wurfschaufeln zu vermeiden, ist vorgesehen, dass der Zwischenbereich oberhalb der Rückwände der vorderen und hinteren Wurfschaufeln zumindest im inneren Bereich mit einem Abdeckelement abgedeckt ist.

Um eine möglichst gleichmäßige Düngerverteilung über die gewünschten Arbeitsbreiten erreichen zu können, ist vorgesehen, dass auf jeder Schleuderscheibe zumindest eine Gruppe Wurfschaufeln mit kürzerer und eine Gruppe Wurfschaufeln mit längerer wirksamer Länge angeordnet sind, wobei jede Gruppe zumindest zwei Wurfschaufeln aufweist.

Um eine Verstellung der inneren Rückwände der Wurfschaufeln in vorgesehener Weise für die verschiedenen Einsatzfälle, wie Verändern der Arbeitsbreite, Normalstreuen, Grenzstreuen, Randstreuen, etc. gewährleisten zu können, ist vorgesehen, dass auf zumindest einer der Schleuderscheiben kürzere und längere Wurfschaufeln angeordnet sind, dass zumindest einer der Schleuderscheiben Mittel zum Verstellen der inneren Rückwände der Wurfschaufeln in der Weise zugeordnet sind, dass in einer ersten Einstellung die inneren Wände sämtlicher Wurfschaufeln so eingestellt sind, dass die Wurfschaufeln in ihrer gesamten wirksamen Länge an der Schleuderwirkung beim Normalstreuen teilnehmen, dass in einer zweiten Einstellung zur Verringerung der Arbeitsbreite des Schleuderdüngerstreuers die Rückwände nur der längeren Wurfschaufeln durch Verstellen des inneren Teils Rückwände in ihrer wirksamen Länge verkürzt werden, und dass in einer dritten Einstellung zum Grenzstreuen und/oder Randstreuen die Rückwände aller Wurfschaufeln durch Verstellen des inneren Teils der Rückwände in ihrer wirksamen Länge verkürzt werden. Somit lässt sich beispielsweise durch das Verkürzen der die Schleuderwirkung der Partikel erzeugenden wirksamen Länge der längeren Wurfschaufeln eine Änderung der Streubildcharakteristik in einfacher Weise erzielen.

Um den Schleuderdüngerstreuer auf die vorerwähnten verschiedenen Betriebsarten in einfacher Weise einstellen zu können, ist vorgesehen, dass zumindest einer der Schleuderscheiben Mittel zum Verstellen der inneren Rückwände der Wurfschaufeln in der Weise zugeordnet sind, dass in einer ersten Einstellung die inneren Wände sämtlicher Wurfschaufeln so eingestellt sind, dass die Wurfschaufeln in ihrer gesamten wirksamen Länge an der Schleuderwirkung beim Normalstreuen teilnehmen, dass in einer zweiten Einstellung zur Verringerung der Arbeitsbreite des Schleuderdüngerstreuers die Rückwände nur der längeren Wurfschaufeln durch Verstellen des inneren Teils Rückwände in ihrer wirksamen Länge verkürzt werden, und dass in einer dritten Einstellung zum Grenzstreuen und/oder Randstreuen die Rückwände aller Wurfschaufeln durch Verstellen des inneren Teils der Rückwände in ihrer wirksamen Länge verkürzt werden.

Zumindest eine weitere Einstellung des Schleuderdüngerstreuers für zumindest einen weiteren Einsatzfall lässt sich dadurch erreichen, dass in zumindest einer vierten Einstellung die Wurfschaufeln für das Grenzstreuen durch entsprechendes Verstellen des inneren Teils der Rückwände der Wurfschaufeln einstellbar sind.

Eine vorteilhafte Verstellung der Rückwände wird dadurch erreicht, dass die Mittel zum Verstellen des jeweiligen inneren Teils der Rückwände der Wurfschaufeln als an den Schleuderscheiben angeordnete elektromotorische Einstellmittel ausgebildet sind. Infolge dieser Maßnahmen kann auch mittels einer elektronischen Steuerungs- und Regelungseinrichtung (Bordcomputer) eine Verstellung der Rückwände in automatischer Weise erfolgen.

Eine Veränderung der wirksamen Länge der Wurfschaufel wird dadurch erreicht, dass der innere Abschnitt der Rückwand gegenüber dem anderen Abschnitt in der Ebene der Schleuderscheibe verschwenkbar- und feststellbar angeordnet ist.

Ein Verschwenken der inneren Abschnitte in die jeweilige Position lässt sich dadurch erreichen, dass die Verstellmittel zum Verstellen des inneren Teils der Rückwände der Wurfschaufeln als Kurvenscheiben oder kurvenähnliche Elemente ausgebildet sind.

Dieses lässt sich auch dadurch verwirklichen, das Kurvenscheiben oder kurvenähnliche Elemente Vertiefungen aufweisen, in welche an den inneren Teile der Rückwände angeordnete Elemente eingreifen.

Auch kann eine Verstellung über eine sogenannte "Totpunkt"-Schaltung erfolgen.

In einer anderen Ausgestaltung der Erfindung ist vorgesehen, dass der innere Abschnitt in einer durch die Rückwand verlaufenden Ebene verstellbar angeordnet ist. Hierbei wird der innere Abschnitt nach oben oder nach unten verschoben.

Um die inneren Abschnitte in einfacher Weise verstellen zu können, ist vorgesehen das der innere Abschnitt an einem auf der Oberseite oder Unterseite der Wurfschaufel sich befindenden Verstellelement befestigt ist und mit diesem gegenüber der Schleuderscheibe und den übrigen Teilen der Wurfschaufel anhebbar und absenkbar ist.

Um sämtliche inneren Abschnitte in gleicher Weise verstellen zu können, ist vorgesehen, dass das Verstellelement als umlaufender Ring ausgebildet ist, dass an diesem Ring sämtliche verstellbaren inneren Abschnitte der Wurfschaufeln angeordnet sind.

Um die Verstelleinrichtung in einfacher Weise an dem Ring angreifen lassen zu können, ist vorgesehen, dass der Ring auf seinem inneren und/oder äußeren Umfang die an ihm befestigten inneren und verstellbaren Abschnitte überragt. Die Verstelleinrichtung kann auch als gabelähnliche Verstelleinrichtung mit Fernbedienungseinrichtung ausgebildet sein.

Somit ist es möglich, dass an dem Verstellelement zumindest eine Verstelleinrichtung, vorzugsweise eine motorische und/oder fernbedienbare Vorrichtung angreift.

Verschiedene Einsatzverfahren des Schleuderdüngerstreuers lassen sich dadurch verwirklichen, dass Wurfschaufeln unterschiedlicher, wirksamer Länge auf der Schleuderscheibe angeordnet sind, dass zur Verringerung der Arbeitsbreite des Schleuderdüngerstreuers nur die wirksame Länge der längeren Wurfschaufel durch Verstellen der inneren Rückwände der längeren Wurfschaufeln verkürzt wird, und dass zum Einstellen des Streuers auf dass Grenzstreuen die wirksame Länge aller Wurfschaufeln durch Verstellen der inneren Rückwände aller Wurfschaufeln verkürzt wird.

In manchen Fällen kann es zur Erreichung einer gleichmäßigen Verteilung des Materiales über die Bodenoberfläche erforderlich sein, da Mittel zum Verstellen des Aufgabebereichtes und/oder Punktes des auszubringenden Materials auf die Schleuderscheibe und/oder Wurfschaufeln vorgesehen sind. Durch diese Maßnahmen lässt sich das veränderte Abschleudern der Materialien an die erforderlichen Einsatzverhältnisse anpassen.

Um eine automatische Anpassung der Streugutverteilung an die unterschiedlichen Ausbringeigenschaften anpassen zu können, ist vorgesehen, das Mittel zum Verstellen des Aufgabebereiches und/oder Punktes mit den Mitteln zum Verstellen der inneren Abschnitte der Wurfschaufeln über eine elektronische Einstelleinrichtung miteinander verknüpft sind. Hierdurch erfolgt dann eine automatische Abgleichung der einzelnen Einstellparameter aufeinander um die gewünschte gleichmäßige Streugutverteilung zu erreichen. Des Weiteren kann es sinnvoll sein, dass die Wurfschaufeln, und zwar die vorderen und hinteren Rückwände entsprechend im Winkel auf der Schleuderscheibe einstellbar sind.

Hierbei kann es sinnvoll sein, die einzelnen Maßnahmen hintereinander zu kombinieren.

Weitere Einzelheiten der Erfindung sind den übrigen Unteransprüchen, der Beispielsbeschreibung und den Zeichnungen zu entnehmen. Hierbei zeigen
- Fig. 1: Den Schleuderstreuer in Seitenansicht und in Prinzipdarstellung,
- Fig. 2: die Ansicht der Schleuderscheiben und der Dosierung in der Ansicht II-II,
- Fig. 3: die Schleuderscheibe mit der Verstelleinrichtung in der Ansicht III-III,
- Fig. 4: die Schleuderscheibe mit der Verstelleinrichtung IV-IV,
- Fig. 5: eine Wurfschaufel in der Draufsicht,
- Fig. 6: die Wurfschaufel in der Ansicht VI-VI,
- Fig. 7: die Ansicht der Schleuderscheibe und der Dosierung umgestellt auf Grenzstreueinstellung, in der Darstellungsweise nach Fig. 2,
- Fig. 8: die Wurfschaufel in Grenzstreustellung, in der Darstellungsweise nach Fig. 6
- Fig. 9: eine anders ausgestaltete Verstell- und Wurfschaufel in der Ansicht II-II,
- Fig. 10: die Schleuderscheibe mit der Verstelleinrichtung gemäß Fig. 9 in der Ansicht X-X,
- Fig. 11: die Schleuderscheibe mit der Verstelleinrichtung gemäß Fig. 9 in der Ansicht XI-XI,
- Fig. 12: die Schleuderscheibe mit der Verstelleinrichtung in Grenzstreustellung, in der Ansicht entsprechend Fig. 9,
- Fig. 13: die Schleuderscheibe mit der Verstelleinrichtung in Grenzstreustellung in der Darstellungsweise nach Fig. 10 und
- Fig. 14: die Schleuderscheibe mit der Verstelleinrichtung in Grenzstreustellung in der Darstellungsweise nach Fig. 11.

Der Schleuderdüngerstreuer weist den Rahmen 1 auf, der an seiner Vorderseite Dreipunktkupplungselemente 2 und zwar zum Anbau an den Dreipunktkraftheber des Schleppers aufweist. An dem Rahmen 1 des Schleuderdüngerstreuer ist der Vorratsbehälter 3 angeordnet, dessen unteres trichterförmiges Ende mittels eines Dosierorgans 4, welches zumindest eine in eine Bodenplatte 5 angeordnete Auslauföffnung 6 und einen zugeordneten mittels Einstellelement 7 einstellbaren Schieber 8 aufweist, abgeschlossen ist. Unterhalb des Dosierorgans 4 ist ein Zuleitungsraum 9 für das von dem Dosierorgan 4 dosierte Material zwecks Zuleitung zu der von einer Antriebseinrichtung 10 rotierend angetriebenen Schleuderscheibe 11 angeordnet. Auf der Schleuderscheibe 11 sind Wurfschaufeln 12 unterschiedlicher Länge angeordnet, deren inneren Enden unmittelbar an der Außenwand des Zuleitungsraumes 9 beginnen. Die Wurfschaufeln 12 weisen unterschiedliche wirksame Längen auf, um unterschiedliche Streubereiche des Streudeckers abzudecken, damit eine gleichmäßige Düngerverteilung über die gewünschte Arbeitsbreite erreicht wird.

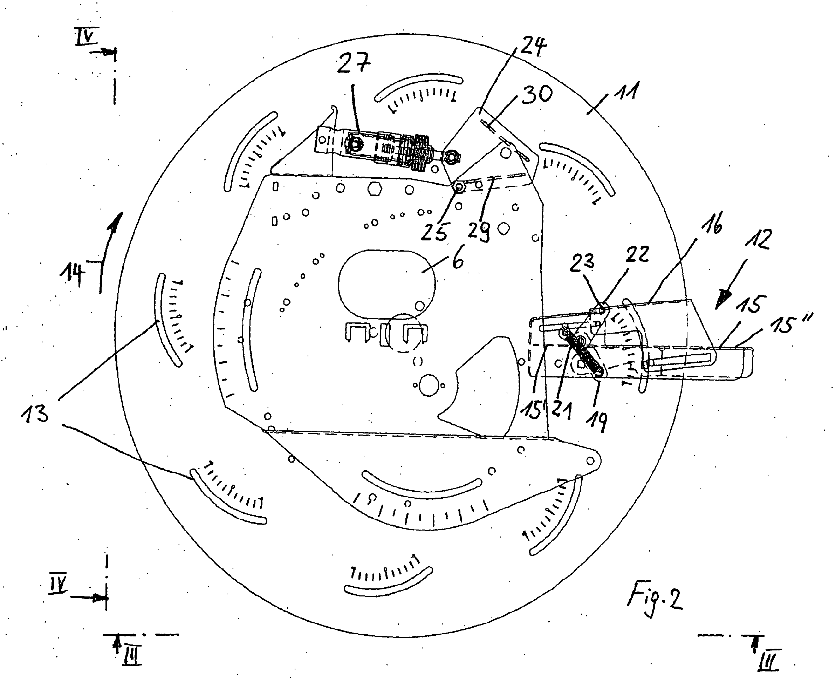

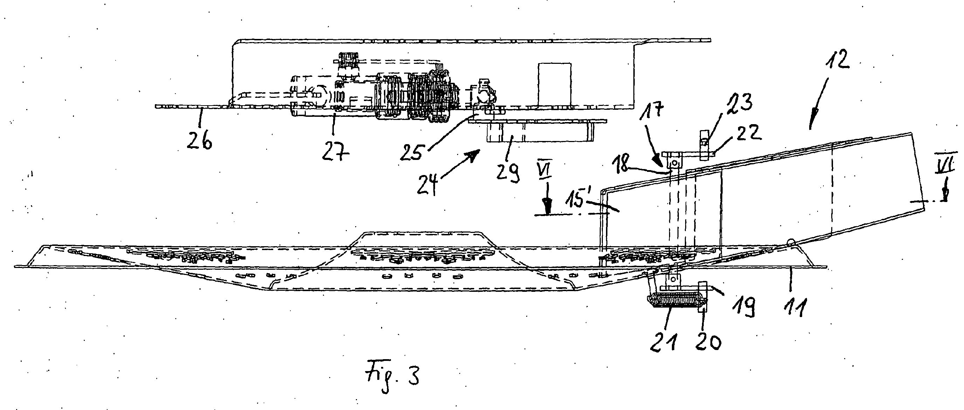

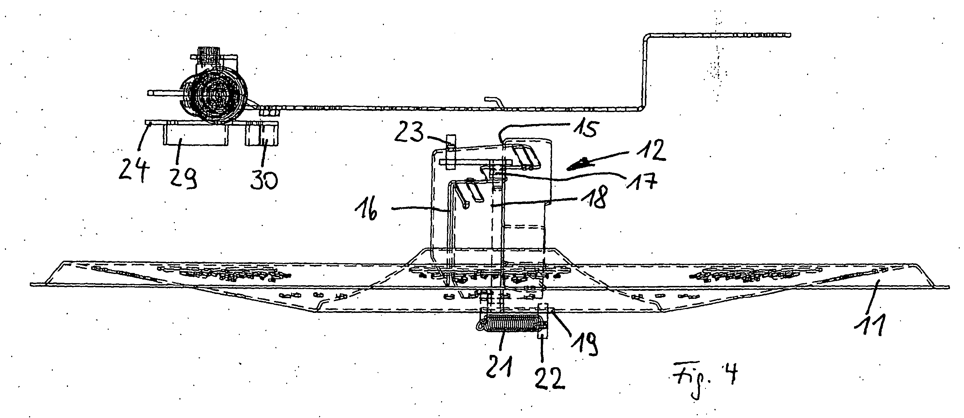

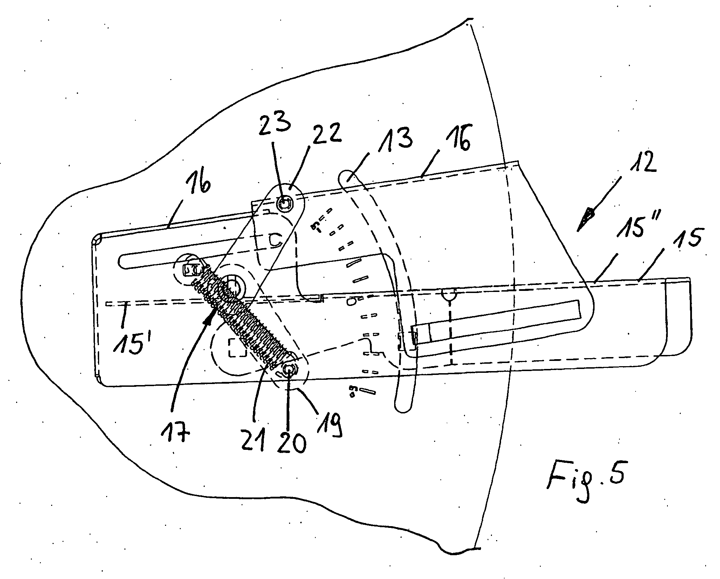

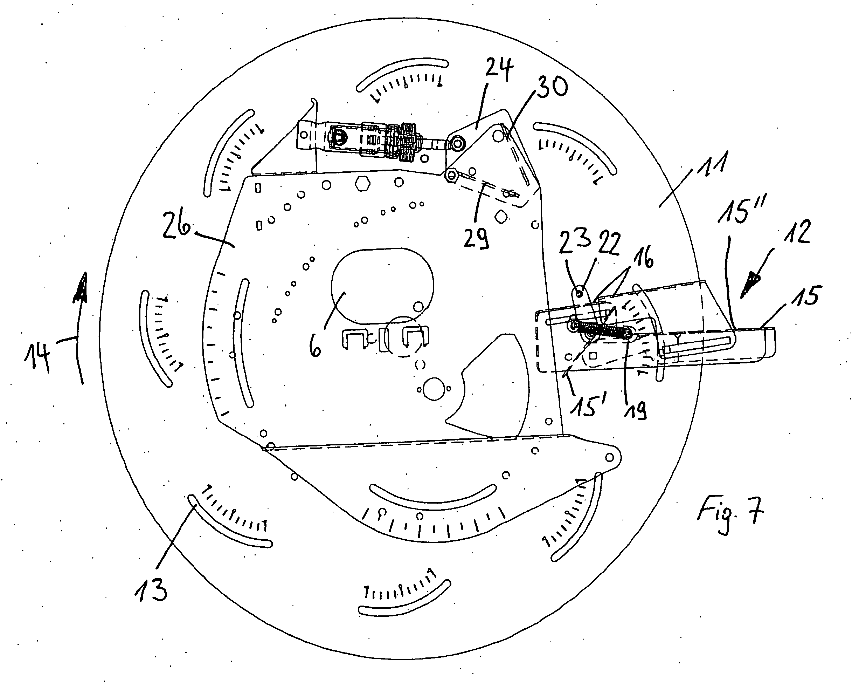

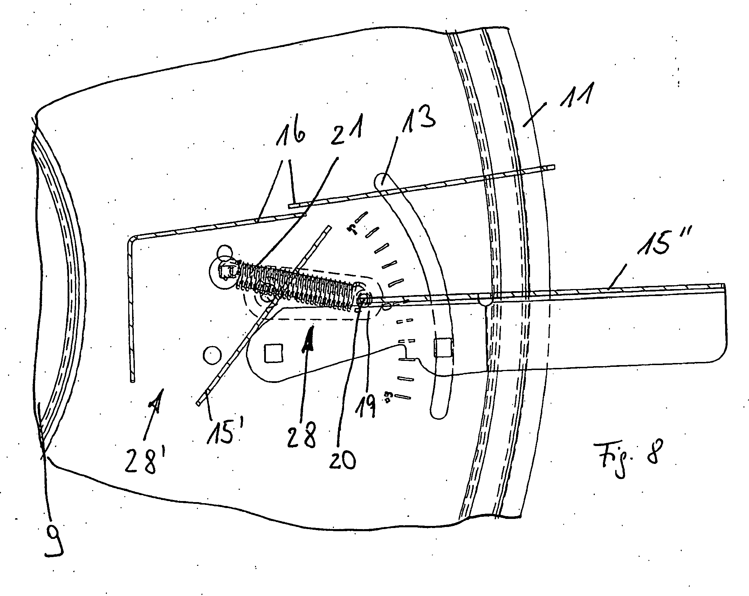

Auf der Schleuderscheibe 11 sind insgesamt 4 längere und 4 kürzere Wurfschaufeln 12 angeordnet. Wegen der Übersichtlichkeit ist jedoch nur eine kürzere Wurfschaufel 12 auf der Schleuderscheibe 11 dargestellt. Die übrigen Wurfschaufeln 12 sind in gleicher Weise und in entsprechender Ausgestaltung an den übrigen dafür vorgesehenen Aufnahmevorrichtungen 13 anzuordnen. Hierbei sind in Drehrichtung 14 der Schleuderscheibe 11 gesehen, jeweils abwechselnd eine kurze und eine lange Schaufel 12 aufeinanderfolgend angeordnet. Die Wurfschaufel 12 weist die vordere 15 und hintere Rückwand 16 auf. Die hintere Rückwand 16 ist in Drehrichtung 14 beabstandet hinter der vorderen Rückwand 15 angeordnet. Die vordere Rückwand 15 beschleunigt den Dünger zum Normalstreuen während, wie in noch nachfolgend beschrieben, der Dünger von der hinteren Rückwand 16 der Wurfschaufel 12 für das Grenzstreuen abgeworfen wird. Die vordere Rückwand 15 besteht aus einem inneren 15' und einem äußeren Abschnitt 15''. Der innere Abschnitt 15' der vorderen Rückwand 15 ist mittels einer Gelenkanordnung 17 an der Wurfschaufel 12 schwenkbar aufgehängt. Die vordere Rückwand 15' ist an einem Drehbolzen 18 der Gelenkanordnung 17 angeordnet. An dem unteren Ende des Drehbolzens 18 ist unterhalb der Schleuderscheibe 11 der Federhebel 19 angeordnet. Zwischen dem äußeren Ende des Federhebels 19 und einen an der Schleuderscheibe 11 angeordnetem Bolzenelement 20 ist die Zugfeder 21 eingehängt. Hierbei ist die Anordnung so gebildet, dass mittels einer "Totpunkt"-anordnung die innere Rückwand 15' der Wurfschaufel 12 in der jeweils vorgesehenen Position sicher gehalten wird. An dem oberen Ende des Gelenkbolzens 18 ist der Schalthebel 22 mit dem an seinem äußeren Ende befindlichen Umlegebolzen 23 angeordnet. Der Umlegebolzen 23 wirkt mit einer Schaltklaue 24 zusammen, die an dem unteren Ende des Vorratsbehälters 3 oder des Rahmens 1 befestigt ist. Die Schaltklaue 24 ist mittels eines Schwenkbolzens 25 an der an dem Vorratsbehälter 3 befestigten Halteplatte 26 angelenkt. Zwischen der Schaltklaue 24 und der Platte 26 ist das motorische Stellelement 27 zum verstellen der Schaltklaue 24 angeordnet. Der innere Abschnitt 15' der vorderen Rückwand 15 kann durch entsprechende Verstellung der Schaltklaue 24 aus der in den Fig. 2-5 dargestellten Normalstreustellung, wobei die innere Abschnitt 15' mit dem äußeren Abschnitt 15'' der vorderen Rückwand 15 fluchtet, in die in den Fig. 7, 8 dargestellte Position verschwenkt werden, hierbei ist dann der innere Abschnitt 15'' der vorderen Rückwand 15 so angeordnet, dass dem äußeren vorderen Abschnitt 15'' kein Dünger mehr zugeführt wird, der Dünger wird der hinteren Rückwand 16 der Wurfschaufel 12 zugeleitet wird. Somit ist der innere Abschnitt 15' der Rückwand 15 der hinteren Rückwand 16 derart zu geordnet, dass der hinteren Rückwand 16 die durch das Verstellen des inneren Abschnittes 15' der vorderen Rückwand 15 geschaffenen Durchtrittsöffnung 28 Material zugeführt wird. Hierdurch wird, aufgrund der kürzeren Länge der hinteren Rückwand 16 der Wurfschaufel 12 das Material nicht mehr so weit abgeschleudert, so dass ein Grenzstreubild entsteht. Durch das Verstellen des inneren Abschnittes 15' der vorderen Rückwand wird eine Durchtrittsöffnung 28 für das zu verteilende Material geschaffen, so dass das Material der hinteren Rückwand 16, die eine kürzere wirksame Länge als die vordere Rückwand 15 der Wurfschaufel 12 aufweist, zugeleitet wird. Der innere Abschnitt 15' der vorderen Rückwand 15 ist also so verstellbar, dass durch Verstellen des inneren Abschnittes 15' der vorderen Rückwand 15 das Material wahlweise der vorderen Rückwand 15 oder der hinteren Rückwand 16 der Wurfschaufel 12 zugeführt wird. Dies bedeutet also, dass nach der jeweiligen Stellung die äußere Rückwand 15' der vorderen Rückwand oder die hintere Rückwand 16 der Wurfschaufel 12 nicht an der Schleuderwirkung teilnimmt.

Anstelle der Schaltklaue 24 können auch Kurvenscheiben oder kurvenscheibenähnliche Elemente vorgesehen sein, um eine Verschwenkung der inneren Rückwand 15' der vorderen Rückwand 15 zu erreichen.

Die Funktionsweise ist folgende:

Wenn die Schaltklaue 24 sich in der in Fig. 2 dargestellten Position befindet, ist mittels der Schaltfläche 29 der Schalthebel 22 in die in Fig. 2 dargestellte Position verschwenkt worden, so dass der innere Abschnitt 15' der vorderen Rückwand 15 der Wurfschaufel 12 sich in der Normalstreustellung befindet, d.h. der innere Abschnitt 15' fluchtet mit dem äußeren Abschnitt 15" der vorderen Rückwand 15. Durch die Feder 21 wird aufgrund der "Totpunkt"-anordnung der innere Abschnitt 15' sicher in der vorgesehenen Position gehalten. Wenn denn der Düngerstreuer auf Grenzstreuen umgestellt werden soll, wird durch das motorische Einstellmittel 27 die Schaltklaue 24 in die in Fig. 7 dargestellte Position verschwenkt. Hierdurch wird durch die Schaltfläche 30 der Schaltklaue 24 der Schalthebel 22 mit dem inneren Abschnitt 15' der vorderen Rückwand 15 in die in den Fig. 7 und 8 dargestellte Position verschwenkt. Durch die entsprechende Anordnung in "Totpunktanordnung" hält die Zugfeder 21 den inneren Abschnitt 15' sicher in der vorgesehenen Position. Das von dem Dosierorgan 4 über den Zuleitungsraum 9 der Wurfschaufeln 12 zugeleitete Material wird nunmehr durch die durch das Verschwenken des inneren Abschnittes 15 der Rückwand 15 geschaffenen Durchtrittsöffnung 28 nicht mehr dem vorderen äußeren Abschnitt 15' der Rückwand 15 zugeleitet, sondern der hinteren Rückwand der Wurfschaufel 12. Weiterhin kann durch die Durchtrittsöffnung 28' zwischen dem Zuleitungsraum 9 und der inneren Rückwand 16 gelangen. Dieses Material kann den freien Durchgang 28' zwischen der Rückwand 16 und dem Abschnitt 15' passieren. Aufgrund der kürzeren wirksamen Länge der hinteren Rückwand 16 wird das Material nicht mehr soweit abgeschleudert, so dass ein Grenzstreubild mit steil abfallender Streuflanke entsteht.

Wenn die Schaltelemente 23 und 24 der kürzeren und längeren Wurfschaufeln 12 auf den gleichen Umlaufkreisen angeordnet sind, werden durch die Schaltklauen 24, die diesen Umlaufkreisen entsprechend zugeordnet ist, alle inneren Abschnitte 15' der kürzeren und längeren Wurfschaufeln 12 gleichzeitig umgeschaltet. Es ist jedoch auch möglich, die Schaltbolzen 23 und die zugeordneten Schaltklauen 24 der kürzeren Wurfschaufeln 12 auf einem anderen Umlaufkreis oder in einer anderen Höhe als die Schaltbolzen 23 und die Schaltklauen 24 der längeren Wurfschaufeln 12 anzuordnen, so dass die inneren Abschnitte der vorderen Rückwände 15 der kürzeren Wurfschaufeln 12 unabhängig von den längeren Wurfschaufeln 12 schaltbar sind. Hierdurch ist es dann möglich, dass in mehreren Einstellungen die Arbeitsbreite verringert oder vergrößert oder unterschiedliche Grenzstreuabstände sowie Rand- oder auch Grenzstreuen einstellbar sind. Somit können dann in einer ersten Einstellungen die inneren Rückwände 15' sämtlicher Wurfschaufeln 12 so eingestellt werden, dass die Rückwände 15 in ihrer gesamten wirksamen Länge an der Schleuderwirkung bei Normalstreuen teilnehmen. In einer zweiten Einstellung können zur Verringerung der Arbeitsbreite des Schleuderdüngerstreuers die Rückwände 15 der längeren Wurfschaufel 12 durch Verstellen der inneren Abschnitte 15' der Rückwände 15 in ihrer wirksamen Länge verkürzt werden. In einer dritten Einstellung zum Grenzstreuen und Randstreuen können dann die Abschnitte 15 der Rückwände aller Wurfschaufeln 12 durch Verstellen des inneren Abschnittes 15' der Rückwände 15 in ihrer wirksamen Länge verkürzt werden. Außerdem kann auch weiterhin vorgesehen werden, dass in einer vierten Einstellung die Wurfschaufeln 12 für das Grenzstreuen durch entsprechendes Verstellen der inneren Abschnitte 15' der Rückwände 15 der Wurfschaufeln 12 einstellbar sind.

In nicht dargestellter Weise können Mittel zum Verstellen des Aufgabebereiches und/oder Aufgabepunktes des auszubringenden Materiales auf die Schleuderscheiben und/oder der Wurfschaufeln vorgesehen sein. Hierbei können beispielsweise die Ringwand des Aufgaberaumes verdreht werden, so dass das Material zu einem anderen Zeitpunkt oder an einer anderen Stelle den Wurfschaufeln zugeführt wird. Es kann ebenfalls in nicht dargestellter Weise vorgesehen sein, das Mittel zum Verstellen des Aufgabebereiches und/oder Punktes mit den Mitteln zum Verstellen der inneren Abschnitte der Wurfschaufeln über eine elektronische Einstellvorrichtung miteinander in nicht dargestellter Weise verknüpft sind. Hier erfolgt dann in automatischer Weise eine entsprechende Anpassung und Einstellung der Maschine auf die gegebenen Einsatzbedingungen.

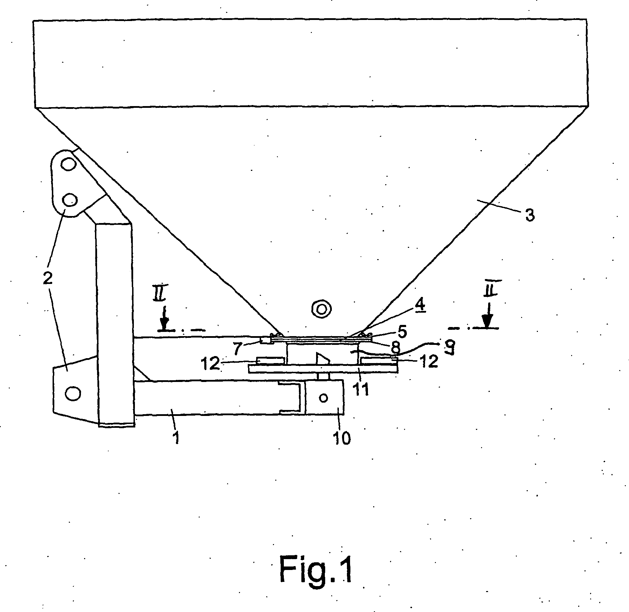

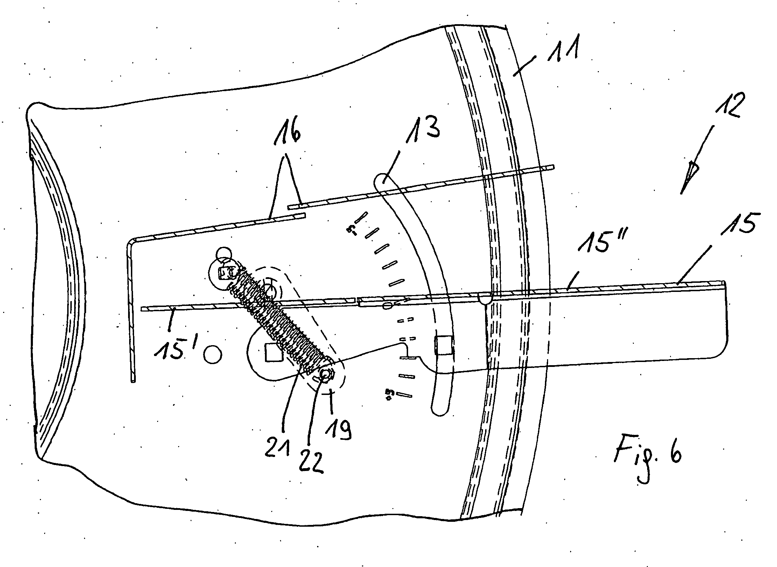

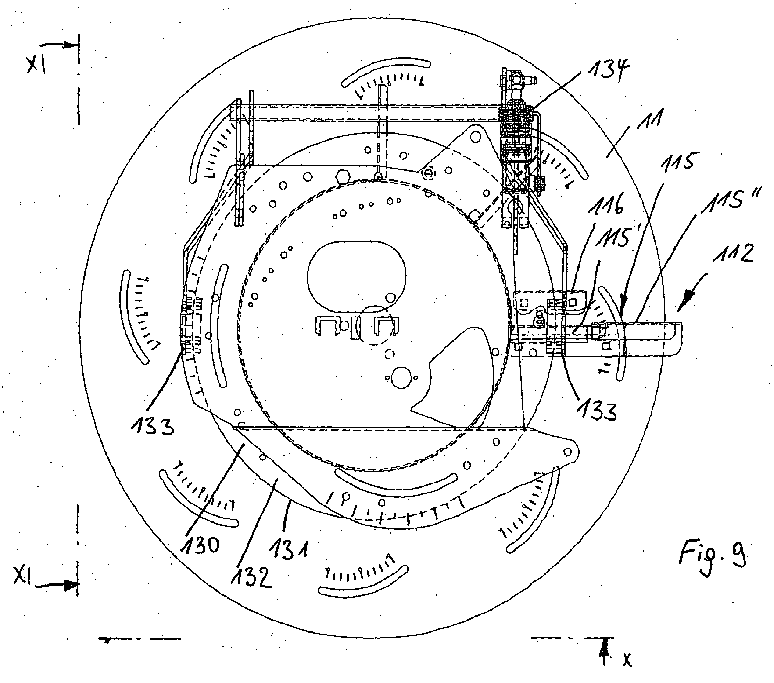

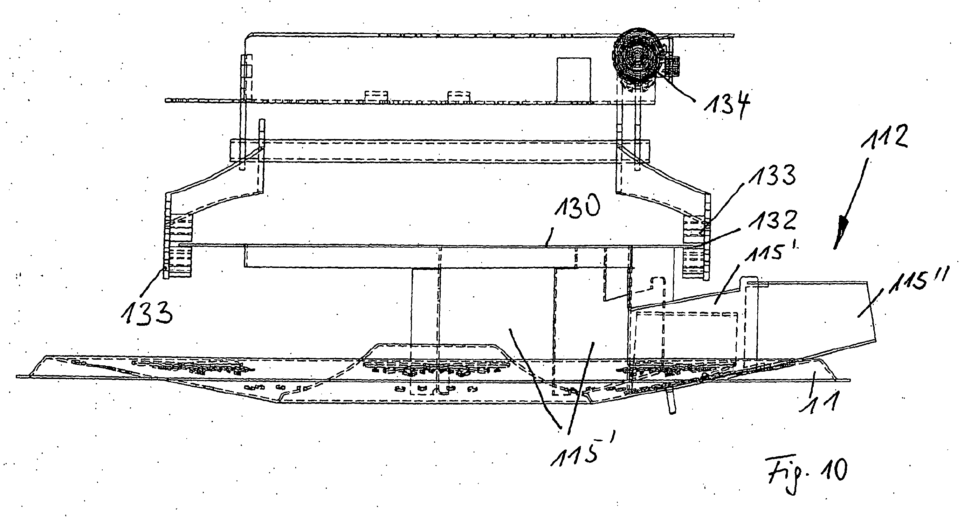

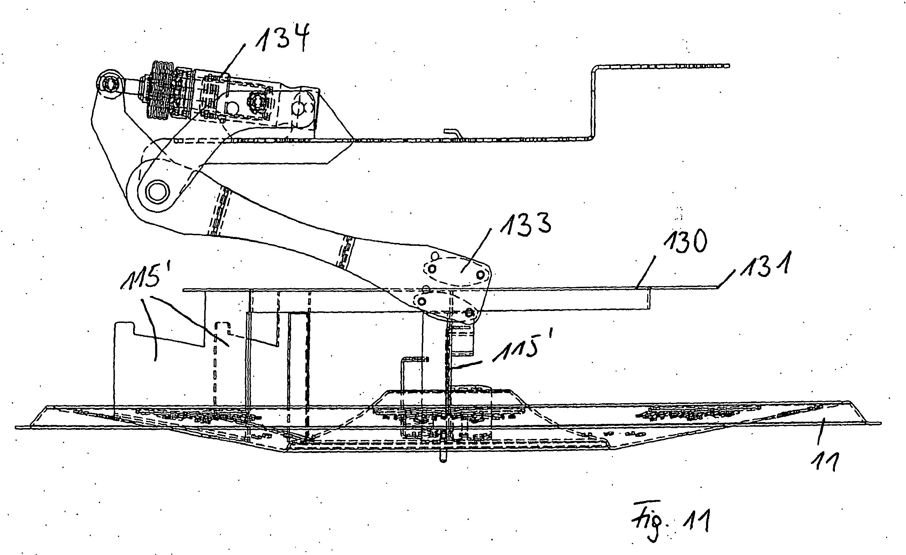

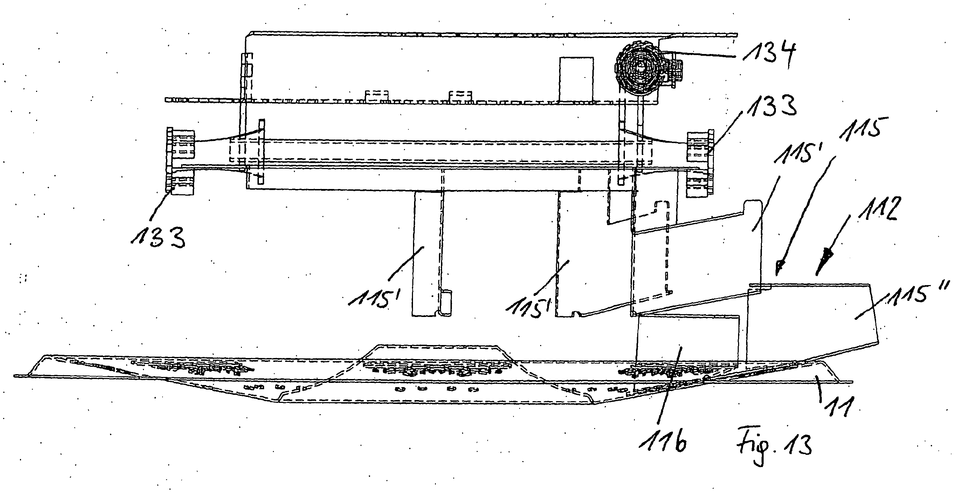

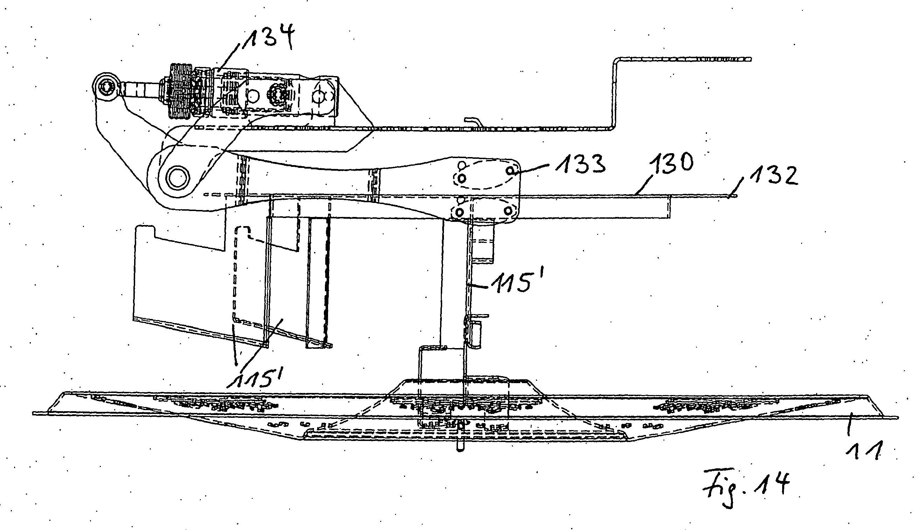

Das Ausführungsbeispiel gemäß den Fig. 9 bis 14 unterscheidet sich von dem Ausführungsbeispiel gemäß Fig. 1 bis 8 dadurch, dass die inneren Abschnitte 115' der vorderen Rückwände 115 nicht verschwenkbar, sondern in der Höhe verschiebbar angeordnet sind, um entsprechende Durchtrittsöffnungen 128 von der vorderen Rückwand 115 zur hinteren Rückwand 116 der Wurfschaufel 112 zu schaffen, so dass der äußere Abschnitt 115' der vorderen Rückwand 115 nicht mehr an der Schleuderwirkung teilnimmt.

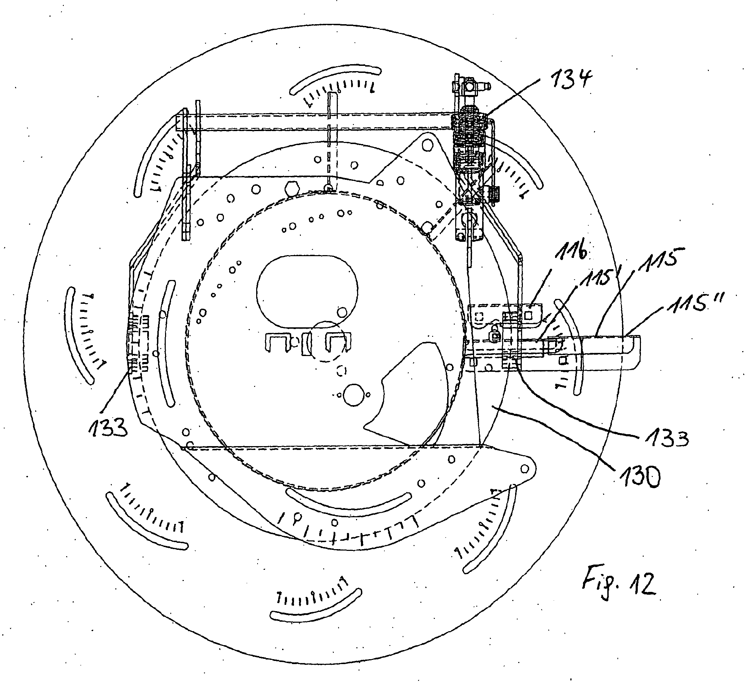

Auch bei den Ausführungsbeispielen nach den Fig. 9-14 ist der Übersichtlichkeit halber nur eine Wurfschaufel 112 sowie drei verschiebbare innere Abschnitte 115' der vorderen Rückwand 115 dargestellt. Auf der Schleuderscheibe 11 sind insgesamt acht Wurfschaufeln 112 angeordnet, wobei vier kürzere und vier längere Wurfschaufeln 112 vorgesehen sind. Jede Wurfschaufel 112 weist eine vordere Rückwand 115 und eine hintere Rückwand 116 auf. An der hinteren Rückwand 116 kann eine nicht dargestellte verschiebbare Rückwandverlängerung angeordnet sein, um die wirksame Länge der hinteren Rückwand einstellen zu können. Die vordere Rückwand 115 weist einen inneren Abschnitt 115' und einen äußeren Abschnitt 115'' auf. Der innere Abschnitt 115 ist zu der Wurfschaufel 112 in senkrechter Ebene verstellbar geführt. Hierzu sind die inneren Abschnitte 115' der vorderen Rückwände 115 an ihrer Oberseite an einem Verstellring 130 angeordnet und hiermit gegenüber der Schleuderscheibe 11 und den übrigen Teilen 115'', 116 der Wurfschaufel 112 anhebbar und absenkbar. Das als umlaufender Ring 130 ausgebildete Verstellelement überragt mit seinem äußeren Umfang 131 die an ihm befestigten inneren und verstellbaren Abschnitte 115'. An diesem Ring 130 sind sämtliche verstellbaren innere Abschnitte 115 der Wurfschaufeln 112 gemäß dem Ausführungsbeispiel nach den Fig. 9-14 angeordnet. An dem die äußeren Abschnitte 115' nach außen überragenden Rand 132 des Rings 130 greift eine gabelähnliche Verstelleinrichtung 133 zum Verstellen der inneren Abschnitte 115' der Wurfschaufeln 112 an. Diese Verstelleinrichtung 133 ist mittels einer motorischen Verstelleinrichtung 134 verstellbar, so dass der Ring 130 mit der an ihm angeordneten inneren Abschnitte 115' in die Fig. 9-11 dargestellte Position abgesenkt und gemäß der in den Fig. 12-14 dargestellten Stellung angehoben ist. In der abgesenkten Stellung wird das von den Dosierorganen 4 den Schleuderscheiben 11 zugeleitete Material von der vorderen Rückwand 115 abgeschleudert, während in der in den Fig. 12-14 dargestellten Position durch das Anheben der inneren Abschnitte 115 das Material durch die so geschaffenen Durchtrittsöffnungen 135 der hinteren Rückwand 116 zugeführt wird, und somit von der hinteren Rückwand 116 der Wurfschaufel 112 abgeschleudert wird.

In nicht dargestellter Weise können die inneren Abschnitte der kürzeren Wurfschaufeln an einer anderen Verstelleinrichtung als die Abschnitte der längeren Wurfschaufeln angeordnet werden, so dass verschiedene Arbeitsbreiten und Grenz- und Randstreuabstände und somit verschiedene Streubilder einstellbar sind, in welcher das Material über der zu bestreuenden Fläche abgeschleudert wird. Hierdurch ist es möglich, dass in einer ersten Einstellungen die inneren Rückwände 115' sämtlicher Wurfschaufeln 112 so eingestellt werden, dass die Rückwände 115 in ihrer gesamten wirksamen Länge an der Schleuderwirkung bei Normalstreuen teilnehmen. In einer zweiten Einstellung können zur Verringerung der Arbeitsbreite des Schleuderdüngerstreuers die Rückwände 115 der längeren Wurfschaufel 112 durch Anheben der inneren Abschnitte 115' der Rückwände 115 in ihrer wirksamen Länge verkürzt werden. In einer dritten Einstellung zum Grenzstreuen und Randstreuen können dann die Abschnitte 115 der Rückwände aller Wurfschaufeln 112 durch Anheben des inneren Abschnittes 115' der Rückwände 115 in ihrer wirksamen Länge verkürzt werden. Außerdem kann auch weiterhin vorgesehen werden, dass in einer vierten Einstellung die Wurfschaufeln 112 für das Grenzstreuen durch entsprechendes Verstellen der inneren Abschnitte 115' der Rückwände 115 der Wurfschaufeln 112 einstellbar sind.

Die hintere Rückwand 116 der Wurfschaufeln 112 sind derart auf der Schleuderscheibe 11 zu den vorderen Rückwänden 115 der Wurfschaufeln 112 angeordnet und ausgestaltet, das der von der hinteren Rückwand 116 abgeworfenen Düngerstrom nicht von einer vorderen Rückwand 115 erfasst wird. Dies ist wichtig, damit in gewünschter Weise ein Grenzstreubild mit steiler Streuflanke entsteht. Die hinteren Rückwände 116 sind ebenfalls, wie die vorderen Rückwände 115 in Scheibenebene winkelverschwenkbar und in unterschiedlichen Positionen mittels geeigneter Feststellmittel einstellbar und feststellbar angeordnet. In nicht dargestellter Weise können auf der Schleuderscheibe 11 zwischen der vorderen Rückwand 115 und der hinteren Rückwand 116 der Wurfschaufeln 112 Ablenkelemente angeordnet sein, welche den durch die Durchtrittsöffnung 128 zu der hinteren Rückwand 116 der Wurfschaufeln durchtretenden Materialstrom derart der hinteren Rückwand 116 zugeleitet wird, dass der von der hinteren Rückwand 116 abgeschleuderte Materialstrom nicht von einer vorderen Rückwand 115 der Wurfschaufeln erfasst wird.

In nicht dargestellter Weise können Mittel zum Verstellen des Aufgabebereiches und/oder Aufgabepunktes des auszubringenden Materiales auf die Schleuderscheiben und/oder der Wurfschaufeln vorgesehen sein. Hierbei können beispielsweise die Ringwand des Aufgaberaumes verdreht werden, so dass das Material zu einem anderen Zeitpunkt oder an einer anderen Stelle den Wurfschaufeln zugeführt wird. Es kann ebenfalls in nicht dargestellter Weise vorgesehen sein, das Mittel zum Verstellen des Aufgabebereiches und/oder Punktes mit den Mitteln zum Verstellen der inneren Abschnitte der Wurfschaufeln über eine elektronische Einstellvorrichtung miteinander in nicht dargestellter Weise verknüpft sind. Hier erfolgt dann in automatischer Weise eine entsprechende Anpassung und Einstellung der Maschine auf die gegebenen Einsatzbedingungen.

## Patentansprüche

1. Schleuderdüngerstreuer mit zumindest zwei rotierend angetriebenen Schleuderscheibein (11), auf denen Wurfschaufeln (12,112) angeordnet sind, mit denen sowohl die Normaldüngung mit flach abfallenden Streuflanken als auch das Grenzstreuen mit steil abfallenden Streuflanken durchführbar ist, wobei bei dem Übergang von Normal- auf Grenzstreuen die Wurfschaufeln (12, 112) umstellbar sind, wobei die Rückwände (16, 116) zumindest einiger der Wurfschaufeln (12, 112) zwei einander anschließende Abschnitte (15', 15'') aufweisen, wobei der eine Abschnitt (15') gegenüber dem anderen Abschnitt (15'') verstellbar angeordnet ist, so dass der äußere der Abschnitte nicht mehr an der Schleuderwirkung teilnimmt, **dadurch gekennzeichnet, dass** hinter der vorderen Rückwand (15, 115) der Wurfschaufel (12, 112) zumindest eine weitere aufrechte Rückwand (16, 116), die eine kürzere wirksame Länge als die vor ihr angeordnete Rückwand (15, 115) aufweist angeordnet ist, dass dieser weiteren Rückwand (16, 116) der Wurfschaufel (12, 112) durch die durch das Verstellen des inneren Abschnittes (15', 115') der vorderen Rückwand (15, 115) der Wurfschaufel (12, 112) geschaffenen Durchtrittsöffnung (28, 128) das zu verteilende Material zuführbar ist.

2. Schleuderdüngerstreuer nach Anspruch 1, **dadurch gekennzeichnet, dass** das innere Ende der weiteren Rückwand (16, 116) derart zu der vorderen Rückwand (15, 115) der Wurfschaufel angeordnet ist, dass der weiteren Rückwand (16, 116) die durch das Verstellen des inneren Abschnittes (15', 115") der vorderen Rückwand (15, 115) geschaffenen Durchtrittsöffnung (28, 128) Material zugeführt wird.

3. Schleuderdüngerstreuer nach Anspruch 2, **dadurch gekennzeichnet, dass** das innere Ende der weiteren Rückwand (16, 116) der Wurfschaufel an die hinteren Bereiche der vorderen Rückwand der Wurfschaufel anschließt.

4. Schleuderdüngerstreuer nach Anspruch 2 und/oder 3, **dadurch gekennzeichnet, dass** der Zwischenbereich oberhalb der vorderen und hinteren Rückwände der Wurfschaufel zumindest im inneren Bereich mit einem Abdeckelement abgedeckt ist.

5. Schleuderdüngerstreuer nach Anspruch 2, **dadurch gekennzeichnet, dass** auf jeder Schleuderscheibe (11) zumindest eine Gruppe Wurfschaufeln mit kürzerer und eine Gruppe Wurfschaufeln mit längerer wirksamer Länge angeordnet sind, wobei die Wurfschaufeln jeder Gruppe zumindest zwei in Drehrichtung hintereinander angeordnete wirksame Rückwände (16, 116) aufweist.

6. Schleuderdüngerstreuer nach einem oder mehreren der vorstehenden Ansprüche, **dadurch gekennzeichnet, dass** zumindest eine der Schleuderscheiben (11) Mittel zum Verstellen der inneren vorderen Rückwände der Wurfschaufeln aufweist.

7. Schleuderdüngerstreuer nach einem oder mehreren der vorstehenden Ansprüche, **dadurch gekennzeichnet, dass** auf zumindest einer der Schleuderscheiben (11) kürzere und längere Wurfschaufeln (12, 112) angeordnet sind, dass zumindest einer der Schleuderscheiben (11) Mittel zum Verstellen der inneren vorderen Rückwände (15', 115) der Wurfschaufeln (12, 112) in der Weise zugeordnet sind, dass in einer ersten Einstellung die inneren Wände (15', 115') sämtlicher Wurfschaufeln (12, 112) so eingestellt sind, dass die vorderen Rückwände (15, 115) der Wurfschaufeln (12, 112) in ihrer gesamten wirksamen Länge an der Schleuderwirkung beim Normalstreuen teilnehmen, dass in einer zweiten Einstellung zur Verringerung der Arbeitsbreite des Schleuderdüngerstreuers die vorderen Rückwände (15, 115) nur der längeren Wurfschaufeln (12, 112) durch Verstellen des inneren Teils (15, 115) vorderen Rückwände (15, 115) in ihrer wirksamen Länge verkürzt werden, und dass in einer dritten Einstellung zum Grenzstreuen und/oder Randstreuen die vorderen Rückwände (15, 115) aller Wurfschaufeln (12, 112) durch Verstellen des inneren Teils (15', 115') der vorderen Rückwände (15, 115) in ihrer wirksamen Länge verkürzt werden.

8. Schleuderdüngerstreuer nach Anspruch 7, **dadurch gekennzeichnet, dass** in einer vierten Einstellung die Wurfschaufeln (12, 112) für das Grenzstreuen durch entsprechendes verstellen des inneren Teils (15', 115') der vorderen Rückwände (15, 115) der Wurfschaufeln (12, 112) einstellbar sind.

9. Schleuderdüngerstreuer nach einem oder mehreren der vorstehenden Ansprüche, **dadurch gekennzeichnet, dass** die Mittel zum Verstellen des jeweiligen inneren Teils (15', 115') der vorderen Rückwände (15, 115) der Wurfschaufeln (12, 112) als an den Schleuderscheiben (11) angeordnete motorische Einstellmittel ausgebildet sind.

10. Schleuderdüngerstreuer nach einem oder mehreren der vorstehenden Ansprüche, **dadurch gekennzeichnet, dass** der innere Abschnitt (15', 115') der vorderen Rückwand (15, 115) gegenüber dem anderen Abschnitt (15*''*, 115*''*) in der Ebene der Schleuderscheibe (11) verschwenkbar- und feststellbar angeordnet ist.

11. Schleuderdüngerstreuer nach einem oder mehreren der vorstehenden Ansprüche **dadurch gekennzeichnet, dass** die Verstellmittel zum Verstellen des inneren Teils (15', 115) der vorderen Rückwände (15, 115) der Wurfschaufeln (12, 112) als Kurvenscheiben oder kurvenähnliche Elemente ausgebildet sind.

12. Schleuderdüngerstreuer nach Anspruch 11, **dadurch gekennzeichnet, dass** Kurvenscheiben oder kurvenscheibenähnliche Elemente Vertiefungen aufweisen, in welche an den inneren Teile der vorderen Rückwände angeordnete Elemente eingreifen.

13. Schleuderdüngerstreuer nach Anspruch 2, **dadurch gekennzeichnet, dass** der innere Abschnitt (15', 115) in einer durch die vorderen Rückwand (15, 115) verlaufenden Ebene verstellbar angeordnet ist.

14. Schleuderdüngerstreuer nach Anspruch 13, **dadurch gekennzeichnet, dass** der innere vordere Abschnitt (115') an einem auf der Oberseite oder der Unterseite der Wurfschaufel sich befindenden Verstellelement (130) befestigt ist und mit diesem gegenüber der Schleuderscheibe (11) und den übrigen Teilen der Wurfschaufel (115*''*, 116) anhebbar und absenkbar ist.

15. Schleuderdüngerstreuer nach Anspruch 14, **dadurch gekennzeichnet, dass** das Verstellelement als umlaufender Ring (130) ausgebildet ist, dass an diesem Ring (130) sämtliche verstellbaren inneren vorderen Abschnitte (115') der Wurfschaufeln (112) angeordnet sind.

16. Schleuderdüngerstreuer, nach Anspruch 15, **dadurch gekennzeichnet, dass** der Ring (130) auf seinem inneren und/oder äußeren Umfang die an ihm befestigten inneren und verstellbaren vorderen Abschnitte (115') überragt.

17. Schleuderdüngerstreuer nach Anspruch 14 bis 15, **dadurch gekennzeichnet, dass** an dem Verstellelement (130) zumindest eine Verstelleinrichtung (130), vorzugsweise eine motorische und/oder fernbedienbare Vorrichtung angreift.

18. Schleuderdüngerstreuer nach einem oder mehreren der vorstehende Ansprüche, **dadurch gekennzeichnet, dass** an dem Ring (130) eine gabelähnliche Verstelleinrichtung (133) mit Fernbedienungseinrichtung zum Verstellen der inneren Abschnitte (115') der Wurfschaufel (112) angreift.

19. Schleuderdüngerstreuer nach Anspruch 2, **dadurch gekennzeichnet, dass** Wurfschaufeln (12, 112) unterschiedlicher wirksamer Länge auf der Schleuderscheibe angeordnet sind.

20. Verfahren zum Einsatz eines Schleuderdüngerstreuers nach einem oder mehreren der vorstehenden Ansprüche, **dadurch gekennzeichnet, dass** Wurfschaufeln (12, 112) unterschiedlicher wirksamer Länge auf der Schleuderscheibe angeordnet sind, dass zur Verringerung der Arbeitsbreite des Schleuderdüngerstreuers nur die wirksame Länge der längeren Wurfschaufel (12, 112) durch Verstellen der inneren vorderen Rückwände (15*'*, 115*'*) der längeren Wurfschaufeln (12, 112) verkürzt wird, und dass zum Einstellen des Streuers auf das Grenzstreuen die wirksame Länge aller Wurfschaufeln (12, 112) durch Verstellen der inneren vorderen Rückwände (15*'*, 115*'*) aller Wurfschaufeln (12, 112) verkürzt wird.

21. Schleuderstreuer nach einem oder mehreren der vorstehenden Ansprüche, **dadurch gekennzeichnet, dass** Mittel zum Verstellen des Aufgabebereiches und/oder -punktes des auszubringenden Materials auf die Schleuderscheibe und/oder der Wurfschaufeln vorgesehen sind.

22. Schleuderstreuer nach Anspruch 21, **dadurch gekennzeichnet, dass** die Mittel zum Verstellen des Aufgabebereiches und/oder -punktes mit den Mitteln zum Verstellen der inneren Abschnitte der Wurfschaufeln über eine elektronische Einstelleinrichtung miteinander verknüpft sind.

## Claims

1. Centrifugal fertilizer spreader with at least two rotatingly driven centrifugal discs (11) on which thrower blades (12, 112) are arranged, said thrower blades being used both to carry out normal fertilization, with spreading flanks which drop in a shallow manner, and border spreading, with spreading flanks which drop steeply, wherein, during the transition from normal spreading to border spreading, the thrower blades (12, 112) are repositionable, wherein the back walls (16, 116) of at least some of the thrower blades (12, 112) have two adjoining sections (15', 15*"*), wherein the one section (15*'*) is arranged adjustably in relation to the other section (15*"*) such that the outer of the sections no longer participates in the centrifugal action, **characterized in that** at least one further upright back wall (16, 116) is arranged behind the front back wall (15, 115) of the thrower blade (12, 112), said back wall having a shorter effective length than the back wall (15, 115) arranged in front thereof, **in that** said further back wall (16, 116) of the thrower blade (12, 112) can be supplied with the material for distribution through the passage opening (28, 128) created by the adjustment of the inner section (15', 115') of the front back wall (15, 115) of the thrower blade (12, 112).

2. Centrifugal fertilizer spreader according to Claim 1, **characterized in that** the inner end of the further back wall (16, 116) is arranged with respect to the front back wall (15, 115) of the thrower blade in such a manner that the further back wall (16, 116) is supplied with material through the passage opening (28, 128) created by the adjustment of the inner section (15', 115") of the front back wall (15, 115).

3. Centrifugal fertilizer spreader according to Claim 2, **characterized in that** the inner end of the further back wall (16, 116) of the thrower blade adjoins the rear regions of the front back wall of the thrower blade.

4. Centrifugal fertilizer spreader according to Claim 2 and/or 3, **characterized in that** the intermediate region above the front and back walls of the thrower blade is covered, at least in the inner region, by a covering element.

5. Centrifugal fertilizer spreader according to Claim 2, **characterized in that** at least one group of thrower blades of a shorter effective length and one group of thrower blades of a longer effective length are arranged on each centrifugal disc (11), wherein the thrower blades of each group have at least two effective back walls (16, 116) arranged one behind the other in the direction of rotation.

6. Centrifugal fertilizer spreader according to one or more of the preceding claims, **characterized in that** at least one of the thrower blades (11) has means for adjusting the inner front back walls of the thrower blades.

7. Centrifugal fertilizer spreader according to one or more of the preceding claims, **characterized in that** shorter and longer thrower blades (12, 112) are arranged on at least one the centrifugal discs (11), **in that** at least one of the centrifugal discs (11) is assigned means for adjusting the inner front back walls (15', 115) of the thrower blades (12, 112) in such a manner that, in a first setting, the inner walls (15', 115') of all of the thrower blades (12, 112) are set in such a manner that the front back walls (15, 115) of the thrower blades (12, 112) participate over the entire effective length thereof in the centrifugal action during normal spreading, **in that**, in a second setting for reducing the working width of the centrifugal fertilizer spreader, the front back walls (15, 115) only of the longer thrower blades (12, 112) are shortened in the effective length thereof by adjustment of the inner part (15, 115) of the front back walls (15, 115), and **in that**, in a third setting for border spreading and/or edge spreading, the front back walls (15, 115) of all of the thrower blades (12, 112) are shortened in the effective length thereof by adjustment of the inner part (15', 115') of the front back walls (15, 115).

8. Centrifugal fertilizer spreader according to Claim 7, **characterized in that**, in a fourth setting, the thrower blades (12, 112) can be set for the border spreading by corresponding adjustment of the inner part (15', 115') of the front back walls (15, 115) of the thrower blades (12, 112).

9. Centrifugal fertilizer spreader according to one or more of the preceding claims, **characterized in that** the means for adjusting the respective inner part (15', 115') of the front back walls (15, 115) of the thrower blades (12, 112) are designed as motor-powered setting means arranged on the centrifugal discs (11).

10. Centrifugal fertilizer spreader according to one or more of the preceding claims, **characterized in that** the inner section (15', 115') of the front back wall (15, 115) is arranged in a pivotable and fixable manner in relation to the other section (15", 115") in the plane of the centrifugal disc (11).

11. Centrifugal fertilizer spreader according to one or more of the preceding claims, **characterized in that** the adjustment means for adjusting the inner part (15', 115) of the front back walls (15, 115) of the thrower blades (12, 112) are designed as disc cams or cam-like elements.

12. Centrifugal fertilizer spreader according to Claim 11, **characterized in that** disc cams or cam-like elements have depressions in which elements arranged on the inner parts of the front back walls engage.

13. Centrifugal fertilizer spreader according to Claim 2, **characterized in that** the inner section (15', 115) is arranged adjustably in a plane running through the front back wall (15, 115).

14. Centrifugal fertilizer spreader according to Claim 13, **characterized in that** the inner front section (115') is fastened to an adjustment element (130) located on the upper side or the lower side of the thrower blade, and is raisable and lowerable in relation to the centrifugal disc (11) and the remaining parts of the thrower blades (115", 116) by means of said adjustment element.

15. Centrifugal fertilizer spreader according to Claim 14, **characterized in that** the adjustment element is designed as an encircling ring (130), and **in that** all of the adjustable inner front sections (115') of the thrower blades (112) are arranged on said ring (130).

16. Centrifugal fertilizer spreader according to Claim 15, **characterized in that** the ring (130) projects on the inner and/or outer circumference thereof over the inner and adjustable front sections (115') fastened thereto.

17. Centrifugal fertilizer spreader according to Claims 14 and 15, **characterized in that** at least one adjustment device (130), preferably a motor-powered and/or remote controllable device, acts on the adjustment element (130).

18. Centrifugal fertilizer spreader according to one or more of the preceding claims, **characterized in that** a fork-like adjustment device (133) with a remote control device for adjusting the inner sections (115') of the thrower blade (112) acts on the ring (130).

19. Centrifugal fertilizer spreader according to Claim 2, **characterized in that** thrower blades (12, 112) of a differing effective length are arranged on the centrifugal disc.

20. Method for using a centrifugal fertilizer spreader according to one or more of the preceding claims, **characterized in that** thrower blades (12, 112) of differing effective length are arranged on the centrifugal disc, **in that**, in order to reduce the working width of the centrifugal fertilizer spreader, merely the effective length of the longer thrower blade (12, 112) is shortened by adjustment of the inner front back walls (15', 115') of the longer thrower blades (12, 112), and **in that**, in order to set the spreader to border spreading, the effective length of all of the thrower blades (12, 112) is shortened by adjustment of the inner front back walls (15', 115') of all of the thrower blades (12, 112).

21. Centrifugal spreader according to one or more of the preceding claims, **characterized in that** means for adjusting the working area and/or working point of the material to be discharged are provided on the centrifugal disc and/or the thrower blades.

22. Centrifugal spreader according to Claim 21, **characterized in that** the means for adjusting the working area and/or working point are linked to the means for adjusting the inner sections of the thrower blades via an electronic setting device.

## Revendications

1. Epandeur centrifuge pour engrais, comprenant au moins deux disques centrifuges (11) entraînés en rotation, sur lesquels sont disposées des pales d'éjection (12, 112) avec lesquelles la fertilisation normale peut être effectuée avec des flancs d'épandage tombant à plat et l'épandage limitrophe peut être effectué avec des flancs d'épandage tombant raidement, les pales d'éjection (12, 112) pouvant être ajustées lors de la transition de l'épandage normal à l'épandage limitrophe, les parois arrière (16, 116) d'au moins certaines des pales d'éjection (12, 112) présentant deux portions (15', 15") se raccordant l'une à l'autre, l'une des portions (15') étant disposée de manière déplaçable par rapport à l'autre portion (15"), de sorte que la portion extérieure ne participe plus à l'effet centrifuge, **caractérisé en ce que** derrière la paroi arrière avant (15, 115) de la pale d'éjection (12, 112) est disposée au moins une paroi arrière droite supplémentaire (16, 116) qui présente une longueur efficace plus courte que la paroi arrière (15, 115) disposée devant elle, et **en ce que** la matière à distribuer peut être acheminée à cette paroi arrière supplémentaire (16, 116) de la pale d'éjection (12, 112) par l'ouverture de passage (28, 128) formée par le déplacement de la portion interne (15', 115') de la paroi arrière avant (15, 115) de la pale d'éjection (12, 112).

2. Epandeur centrifuge pour engrais selon la revendication 1, **caractérisé en ce que** l'extrémité interne de la paroi arrière supplémentaire (16, 116) est disposée par rapport à la paroi arrière avant (15, 115) de la pale d'éjection de telle sorte que la matière soit acheminée à la paroi arrière supplémentaire (16, 116) par l'ouverture de passage (28, 128) formée par le déplacement de la portion interne (15', 115') de la paroi arrière avant (15, 115).

3. Epandeur centrifuge pour engrais selon la revendication 2, **caractérisé en ce que** l'extrémité interne de la paroi arrière supplémentaire (16, 116) de la pale d'éjection se raccorde aux régions arrière de la paroi arrière avant de la pale d'éjection.

4. Epandeur centrifuge pour engrais selon la revendication 2 et/ou 3, **caractérisé en ce que** la région intermédiaire au-dessus des parois arrière avant et arrière de la pale d'éjection est recouverte au moins dans la région interne avec un élément de recouvrement.

5. Epandeur centrifuge pour engrais selon la revendication 2, **caractérisé en ce que** sur chaque disque centrifuge (11) sont disposés au moins un groupe de pales d'éjection de longueur efficace plus courte et un groupe de pales d'éjection de longueur efficace plus longue, les pales d'éjection de chaque groupe présentant au moins deux parois arrière (16, 116) efficaces disposées les unes derrière les autres dans le sens de rotation.

6. Epandeur centrifuge pour engrais selon l'une quelconque ou plusieurs des revendications précédentes, **caractérisé en ce qu'**au moins l'un des disques centrifuges (11) présente des moyens pour déplacer les parois arrière avant internes des pales d'éjection.

7. Epandeur centrifuge pour engrais selon l'une quelconque ou plusieurs des revendications précédentes, **caractérisé en ce que** sur au moins l'un des disques centrifuges (11) sont disposées des pales d'éjection (12, 112) plus courtes et plus longues, **en ce qu'**au moins l'un des disques centrifuges (11) présente des moyens pour déplacer les parois arrière avant internes (15', 115') des pales d'éjection (12, 112) de telle sorte que dans un premier ajustement, les parois internes (15', 115') de toutes les pales d'éjection (12, 112) soient ajustées de telle sorte que les parois arrière avant (15, 115) des pales d'éjection (12, 112) participent sur toute leur longueur efficace à l'effet centrifuge lors de l'épandage normal, que dans un deuxième ajustement, pour réduire la largeur de travail de l'épandeur centrifuge pour engrais, les parois arrière avant (15, 115) de seulement les pales d'éjection plus longues (12, 112) soient raccourcies dans leur longueur efficace par déplacement de la partie interne (15', 115') des parois arrière avant (15, 115), et que dans un troisième ajustement, pour l'épandage limitrophe et/ou l'épandage aux bords, les parois arrière avant (15, 115) de toutes les pales d'éjection (12, 112) soient raccourcies dans leur longueur efficace par déplacement de la partie interne (15', 115') des parois arrière avant (15, 115).

8. Epandeur centrifuge pour engrais selon la revendication 7, **caractérisé en ce que** dans un quatrième ajustement, les pales d'éjection (12, 112) pour l'épandage limitrophe peuvent être ajustées par un déplacement correspondant de la partie interne (15', 115') des parois arrière avant (15, 115) des pales d'éjection (12, 112).

9. Epandeur centrifuge pour engrais selon l'une quelconque ou plusieurs des revendications précédentes, **caractérisé en ce que** les moyens pour déplacer la partie interne respective (15', 115') des parois arrière avant (15, 115) des pales d'éjection (12, 112) sont réalisés sous forme de moyens d'ajustement motorisés disposés sur les disques centrifuges (11).

10. Epandeur centrifuge pour engrais selon l'une quelconque ou plusieurs des revendications précédentes, **caractérisé en ce que** la portion interne (15', 115') de la paroi arrière avant (15, 115) est disposée de manière à pouvoir pivoter et être fixée par rapport à l'autre portion (15", 115") dans le plan du disque centrifuge (11).

11. Epandeur centrifuge pour engrais selon l'une quelconque ou plusieurs des revendications précédentes, **caractérisé en ce que** les moyens de réglage pour déplacer la partie interne (15', 115') des parois arrière avant (15, 115) des pales d'éjection (12, 112) sont réalisés sous forme de cames ou d'éléments similaires à des cames.

12. Epandeur centrifuge pour engrais selon la revendication 11, **caractérisé en ce que** des cames ou des éléments similaires à des cames présentent des renfoncements dans lesquels viennent en prise des éléments disposés sur les parties internes des parois arrière avant.

13. Epandeur centrifuge pour engrais selon la revendication 2, **caractérisé en ce que** la portion interne (15', 115') est disposée de manière déplaçable dans un plan s'étendant à travers la paroi arrière avant (15, 115).

14. Epandeur centrifuge pour engrais selon la revendication 13, **caractérisé en ce que** la portion interne avant (115') est fixée sur un élément de réglage (130) se trouvant sur le côté supérieur ou sur le côté inférieur de la pale d'éjection, et peut être soulevée et abaissée avec celui-ci par rapport au disque centrifuge (11) et aux autres parties de la pale d'éjection (115", 116).

15. Epandeur centrifuge pour engrais selon la revendication 14, **caractérisé en ce que** l'élément de réglage est réalisé sous la forme d'une bague périphérique (130), et **en ce que** toutes les portions avant internes réglables (115') des pales d'éjection (112) sont disposées sur cette bague (130).

16. Epandeur centrifuge pour engrais selon la revendication 15, **caractérisé en ce que** la bague (130) dépasse sur sa périphérie interne et/ou externe des portions internes et avant réglables (115') fixées sur elle.

17. Epandeur centrifuge pour engrais selon les revendications 14 et 15, **caractérisé en ce qu'**au moins un dispositif de réglage (133), de préférence un dispositif motorisé et/ou à commande à distance, vient en prise sur l'élément de réglage (130).

18. Epandeur centrifuge pour engrais selon l'une quelconque ou plusieurs des revendications précédentes, **caractérisé en ce qu'**un dispositif de réglage (133) de type fourche, avec un dispositif de commande à distance pour déplacer les portions internes (115') de la pale d'éjection (112), vient en prise sur la bague (130).

19. Epandeur centrifuge pour engrais selon la revendication 2, **caractérisé en ce que** des pales d'éjection (12, 112) de longueur efficace différente sont disposées sur le disque centrifuge.

20. Procédé pour l'utilisation d'un épandeur centrifuge pour engrais selon l'une quelconque ou plusieurs des revendications précédentes, **caractérisé en ce que** des pales d'éjection (12, 112) de longueur efficace différente sont disposées sur le disque centrifuge, **en ce que** pour réduire la largeur de travail de l'épandeur centrifuge pour engrais, seulement la longueur efficace des pales d'éjection (12, 112) plus longues est raccourcie par déplacement des parois arrière avant internes (15', 115') des pales d'éjection (12, 112) plus longues, et **en ce que** pour l'ajustement de l'épandeur à l'épandage limitrophe, la longueur efficace de toutes les pales d'éjection (12, 112) est raccourcie par déplacement des parois arrière avant internes (15', 115') de toutes les pales d'éjection (12, 112).

21. Epandeur centrifuge selon l'une quelconque ou plusieurs des revendications précédentes, **caractérisé en ce que** des moyens sont prévus sur le disque centrifuge et/ou les pales d'éjection pour déplacer la région de chargement et/ou le point de chargement de la matière à épandre.

22. Epandeur centrifuge selon la revendication 21, **caractérisé en ce que** les moyens pour déplacer la région de chargement et/ou le point de chargement et les moyens pour déplacer les portions internes des pales d'éjection sont reliés les uns aux autres par un dispositif d'ajustement électronique.
